# EUROPEAN PATENT APPLICATION

(11) **EP 1 575 145 A1**
(43) Date of publication of application: **14.09.2005**
(21) Application number: 05003911.4
(22) Date of filing: 23.02.2005
(51) Int. Cl.: H02J 7/14, H02H 3/00

(54) **Device and method for multiple-channel load control**

(30) Priority: 08.03.2004 JP 2004064600
(71) Applicant: OMRON CORPORATION, Kyoto 600-8530 (JP)
(72) Inventor: Itoshima, Hiroshi c/o Omron Corporation, Shiokoji-dori Kyoto-shi Kyoto 600-8530 (JP); Marumo, Katsuya c/o Omron Corporation, Shiokoji-dori Kyoto-shi Kyoto 600-8530 (JP)
(74) Representative: Kilian, Helmut

(57) **Abstract**

A terminal table unit is connected to a DC power source and a plurality of loads and serves to receive DC power from a DC power source and to distribute the received power to these loads. The terminal table unit includes a plurality of power supply terminals for connecting to these loads and a control unit that controls the timing of connecting and disconnecting the loads to and from the DC power source, a threshold current value related to the timing of disconnecting the DC power source, the display of current and voltage values and the output relating to an overcurrent and an abnormal voltage value.

## Description

### Background of the Invention

This invention relates to a terminal table unit for receiving power from a source unit and distributing this power to a plurality of loads and in particular to such a terminal table unit capable of setting the timing of connecting and disconnecting a DC power source for each of power supply terminals and a threshold value related to the overcurrent for disconnecting the DC power source as well as displaying the current and voltage values and reporting on an overcurrent.

In Japanese Patent Publication Tokkai 2002-252923, the present applicant disclosed a terminal table unit provided with output lines such that a DC power input from a source unit is branched and outputted to a plurality of loads and means for shutting off only the output line through which there is an overcurrent. Thus, there is no need to provide each output line with a breaker and the complicated work for connection as well as the space for setting such breakers can be dispensed with.

This prior art terminal table unit is disadvantageous because a component for shutting off the overcurrent is required for each output line and a threshold value related to overcurrent is required to be set for each output line for activating its shutoff means. This means that many shutoff units are required to be prepared.

When a load connected to an output line is changed, furthermore, the corresponding unit for shutting off its power supply must also be replaced with a new one with a different threshold value best suited to the load. If there is no such replacement unit readily available, this means that the new load cannot be activated and this has a serious consequence that adversely affects the productivity.

Moreover, there have been desires among the users of prior art terminal table units to adjust the start-up and fall sequences and to check the conditions of the current and voltage values during the operation.

### Summary of the Invention

It is therefore an object of this invention in view of such problems and the users' desires to provide an improved terminal table unit capable of setting the timing of connection and disconnection of the DC power source for each power supply terminal, setting a threshold value for shutting off the DC power source (or the DC power supply), displaying the current and voltage values and reporting on an overcurrent.

A terminal table unit of this invention, in view of the above, is for receiving DC power from a DC power source and distributing the received power to a plurality of loads and may be characterized as comprising a plurality of power supply terminals for connecting to these loads and a control unit for controlling timing of connecting and disconnecting the loads to and from the DC power source, a threshold current value related to the timing of disconnecting, display of current and voltage values and an output relating to an overcurrent and an abnormal voltage value. With a terminal table unit thus structured, the user can freely set the condition of the DC power source and observe the operating conditions of its DC currents.

In the above, the control unit may be characterized as including sequence means for determining such timing, current detecting means for detecting current values, voltage detecting means for detecting terminal voltage values at the supply terminals, switching means for connecting and disconnecting the loads to and from the DC power source, display means for displaying these current values and terminal voltage values, reporting means for making a report on the overcurrent and the abnormal voltage value and control means for controlling overall operations of the control unit. The control unit may further include setting means for setting and changing the timing and a threshold current value related to the starting of a report by the reporting means, as well as memory means for storing the aforementioned threshold current value related to the starting of the report by the reporting means, the threshold current value related to the timing of disconnecting and sequence data related to connection and disconnection of the DC power source.

The control means may be further characterized as serving to control so as not to have the aforementioned report outputted or to disconnect the DC power source even if an overcurrent is detected by the current detecting means, based on the detected current value and the so-called transient time (or setting time) of an overcurrent.

The invention further relates to a control method of a terminal table unit as described above, characterized as comprising the steps of connecting the loads to a DC power source at a specified timing, displaying current and voltage values, judging whether a detected current value exceeds a first set value or not, reporting on an overcurrent if the detected current value is judged to exceed the first set (threshold) value, judging whether a detected current value exceeds a second set (threshold) value or not, and disconnecting the loads from the DC power source if the detected current value is judged to exceed the second set value. With such a method, the occurrence of an overcurrent can be reported and the DC power source can be disconnected reliably.

### Brief Description of the Drawings

Fig. 1 is a structural diagram of a terminal table unit embodying this invention.
Fig. 2 is a block diagram of an essential portion of a terminal table control unit embodying this invention.
Figs. 3A, 3B, 3C and 3D, together referred to as Fig. 3, are load current characteristic curves for showing the function of preventing rush current as one of the embodiments of the control means according to this invention.
Fig. 4 is an external view of an example of the control unit.
Fig. 5 is a flowchart of an example of control by the control unit of this invention.

### Detailed Description of the Invention

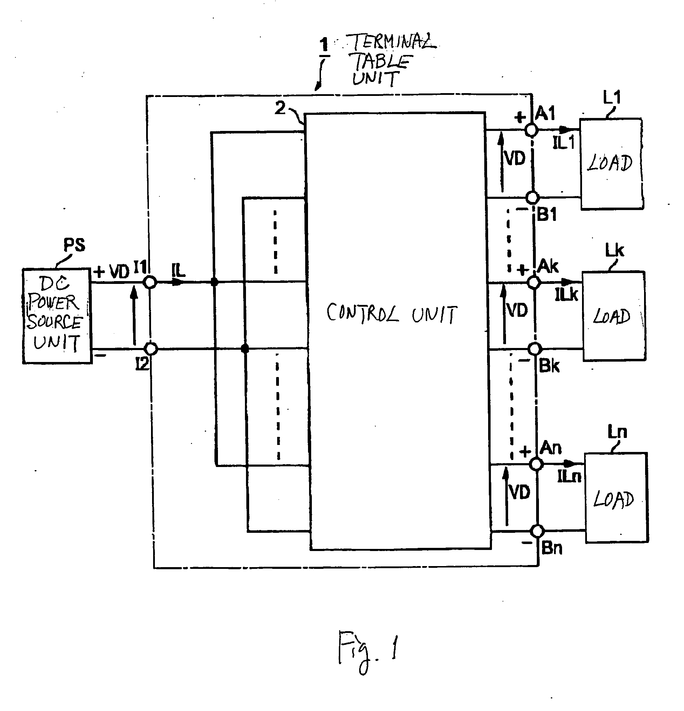

The invention is described next by way of an embodiment. Fig. 1 shows the structure of a terminal table unit 1 embodying this invention, provided with a control unit 2, input terminals I1 and I2 for connecting a DC power source unit PS and output terminals A1, B1-An, Bn for branching the DC voltage VD supplied from the DC power source unit PS to supply DC voltage VD and load currents IL1-ILn respectively to loads L1-Ln. The control unit 2 is for controlling not only the timing of connecting and disconnecting the DC power source (DC voltage VD) to be supplied to the loads L1-Ln through each of the output terminals (power supply terminals) A1, B1-An, Bn but also the display of the current and voltage values and the reporting on overcurrents.

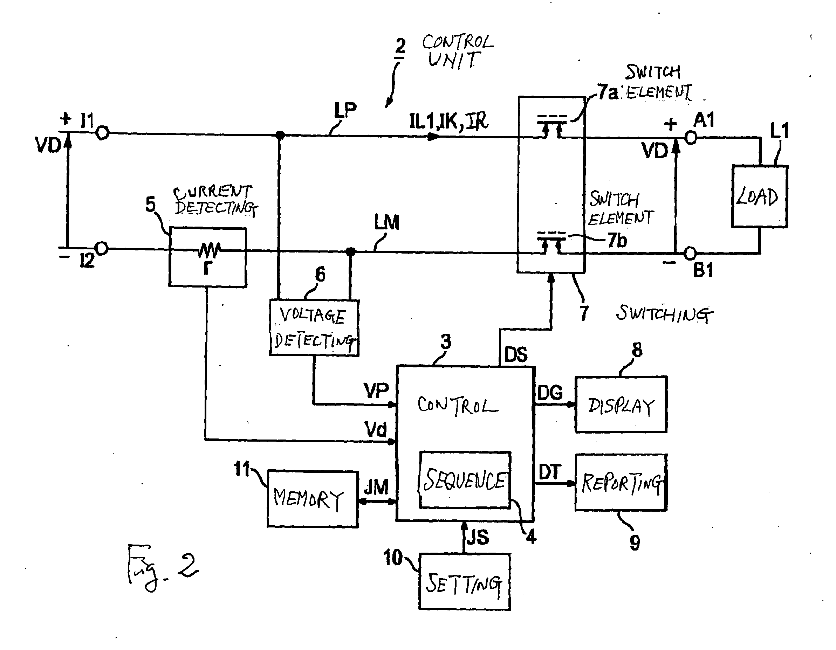

Fig. 2 is a block diagram of this control unit 2. In what follows, the control unit 2 will be explained in terms of only one of its blocks (channel CH1) for supplying DC power source (DC voltage VD) from the output terminals A1, B1 to the load L1 but the other blocks (channel CH2 - channel CHn) for supplying the DC power (DC voltage VD) are of the same structure.

As shown in Fig. 2, the control unit 2 is provided with a control means 3, a sequence means 4 included in the control means 3, a current detecting means 5, a voltage detecting means 6, a switching means 7, a display means 8, a reporting means 9, a setting means 10 and a memory means 11.

The control means 3 is based on a microcomputer and, being provided with A/D conversion function, calculation functions of various kinds, comparison function, timer function and processing function, is adapted to supply switch data DS to the switching means 7 on the basis of data determined by the sequence means 4 to switch on and off the switch elements 7a and 7b and to connect and disconnect the DC voltage VD between output lines LP and LM to the output terminals A1 and B1 at the set timing.

The control means 3 also serves to compare the converted voltage Vd (obtained by converting the load current IL1 from the current detecting means 5) with a voltage value stored in the memory means 11, to supply report data DT to the reporting means 9 to have an alarm sounded to make a report that an abnormal current is flowing through the load L1 if the converted voltage Vd is found to exceed a voltage value corresponding to an overcurrent IK. A transistor and a relay are also activated on the basis of the report data DT to output an electric signal so as to control external display and alarm devices to display and output a warning that there is an abnormal current.

If the converted voltage Vd supplied from the current detecting means 5 further exceeds a threshold voltage value corresponding to the overcurrent IK, the control means 3 supplies the switch data DS to the switching means 7 to switch off the switch elements 7a and 7b and thereby disconnect the DC voltage VD between output lines LP and LM from the output terminals A1 and A2.

Under the initial condition wherein the DC voltage VD is supplied to the load L1, the control means 3 compares the detected voltage VP provided from the voltage detecting means 6 with the voltage value stored in the memory means 11. If the detected voltage VP remains in excess of a voltage value (such as 22V) close to the constant value (such as 24V) of the DC voltage VD over a specified length of time, the control means 3 supplies the switch data DS to the switching means 7 to thereby switch on the switch elements 7a and 7b and drives the load L1 at a normal voltage from the initial supply time of the DC voltage.

If the detected voltage VP provided from the voltage detecting means 6 remains below the aforementioned voltage value (such as 22V) close to the constant DC voltage value VD (such as 24V) over a specified length of time while the DC voltage VD is being supplied to the load L1, the control means 3 supplies the switch data DS to the switching means 7 to thereby switch off the switch elements 7a and 7b and carries out a control such that the load L1 is not driven under the condition of abnormal DC voltage.

Another control carried out by the control means 3 is to supply display data DG based on the converted voltage Vd provided from the current detecting means 5 and the detected voltage VP provided from the voltage detecting means 6 and to thereby cause the load current IL1 inclusive of the overcurrent IK and the DC voltage VD to be displayed on the display means 8 in terms respectively of a current value and a voltage value.

The control means 3 further serves to carry out the control of having setting data JS supplied from the setting means 10 such as the timing data for connecting and disconnecting the supply of the DC voltage VD, overcurrent value data of the overcurrent IK on a plurality of levels, the lower limit data on the start of supplying the DC voltage VD, the upper limit data on the stopping the supply of the DC voltage VD, the overcurrent value data of the overcurrent IK against rush current IR and the timing data of the continuing time to be stored by the memory means 11 as memory data JM.

The control means 3 also serves to supply the set data JS from the setting means 10 or the memory data JM from the memory means 11 to the display means 8 as display data DG and to cause information and data of different kinds to be displayed on the display means 8.

When there is a rush current IR under the initial condition wherein the load L1 supplies the DC voltage VD such as a capacitive load, the control means 3 carries out the control of not making any report on the over current 1K or shutting off the power supply on the basis of the detected overcurrent IK and its transient time τ although the current detecting means 6 may detect an overcurrent IK.

The sequence means 4 is provided with an ordering function and a timer function and is adapted to generate switch data DS for switching on and off the switch elements 7a and 7b of the switching means 7 on the basis of the set data JS from the setting means 10. When there is the flow of a rush current IR, the sequence means 4 serves to monitor the value of the overcurrent IK supplied from the current detecting means 5 and the transient time τ. Although the rush current IR may exceed the value of the overcurrent IK, if it is less than a specified transient time τ, the generation of the switch data DS which would normally take place to switch off the switch elements 7a and 7b of the switching means 7 is inhibited and the DC voltage VD is continuously supplied to the load L1 such that the shutting off of the DC source caused by a rush current IR which would necessarily be generated in the initial condition as the DC source (DC voltage VD) is applied to a capacitive load is prevented from occurring.

The current detecting means 5 comprises a resistor r inserted into the output line LM and a differential amplifier for amplifying the voltage drop due to the load current IL1 through the resistor r and is adapted to detect the load current IL1 as a corresponding converted voltage Vd and to output it to the control means 3.

The voltage detecting means 6 serves to reduce the DC voltage VD between the output lines LP and LM by resistive voltage division or by means of a differential amplifier, to detect the reduced DC voltage as detection voltage VP and to output it to the control means 3.

The switching means 7 is formed with semiconductor switches such as relays, MOSFETs and transistors and is inserted into the output lines LP and LM, serving to switch the switch elements 7a and 7b on (as shown by solid lines) or off (as shown by broken lines) so as to connect and to disconnect the DC source to and from the output terminals A1 and B1. The switch elements 7a and 7b correspond to relay contact points, the drain and the source of a MOSFET and the collector and the emitter of a transistor, and the relay and the semiconductor switch may be switched on and off by supplying switch data DS to the relay coil, the FET gate or the base of the transistor.

The display means 8 may be formed with a display driver circuit and an LCD (liquid crystal display) and serves to generate a display driver signal in response to the display data DG supplied from the control means 3 and to display a current value or a voltage value on the LCD. The display means 8 may be provided with a plurality of light emitting diodes (LEDs) and adapted to activate a blue light emitting diode when the switching means 7 is in the switched-on condition and to activate a red light emitting diode when the switching means 7 is in the switched-off condition.

The reporting means 9 is comprised of an oscillator and a speaker and serves to generate an alarm signal in response to communication data DT supplied from the control means 3, causing an alarm sound to be emitted to report an abnormal condition in the DC voltage VD or the load current IL1.

The setting means 10 is comprised of a key, a volume or a rotary switch and serves to supply set data JS for setting and changing the timing data for the connection and disconnection of the DC source, the overcurrent value data of the overcurrent IK on a plurality of levels, the lower limit voltage data for starting supply of DC voltage VD, the upper limit voltage data for stopping the supply, the overcurrent value data of the over current IK corresponding to the rush current IR and the timing data of the transient time τ.

Thus, since the terminal table unit 2 according to this invention is provided with such a setting means 10 for setting or changing the timing for connecting and disconnecting the source (DC voltage VD) and the overcurrent value IK, the timing for connecting and disconnecting the DC source (DC voltage VD) to be supplied to the load L1 as well as the overcurrent value IK for disconnecting the DC power source (DC voltage VD) can be freely changed according to the desires of the users and hence the degree of freedom of the unit can be expanded.

The memory means 11 may comprise a fixed memory such as a ROM or a rewritable memory such as a flash memory and serves to store as the memory data JM the timing data on the connection and disconnection of the DC source, overcurrent value data on the plurality of levels of the overcurrent IK, the lower limit voltage data for the start of supply of the DC voltage VD, the upper limit voltage data for stopping the supply, the overcurrent value data of the overcurrent IK corresponding to the rush current IR and the timing data of continuing time, based on the set data JS from various control programs and the setting means 10. The memory means 11 also serves to provide the memory data JM to the control means 3.

In summary, since the control unit 2 according to this invention is not only adapted to store the overcurrent IK value for beginning a report and the overcurrent data of the overcurrent IK value for switching off the switching means 7 but also provided with a memory means 11 for storing the sequence data on connecting and disconnecting the power source, reporting on the overcurrent, disconnection of the DC source corresponding to the overcurrent and the sequence of connection and disconnection can be freely set and acted upon.

Although the invention was described above as if the control means 3, the reporting means 9, the setting means and the memory means 11 belonged to one block (channel CH1), this is not intended to limit the scope of the invention. They may be deemed to belong to and to be used in common among a plurality of blocks such as 2-n blocks (channels CH2-CHn).

Since the control unit 2 according to this invention is further provided with a sequence means 4 for determining the timing for connecting and disconnecting the power source, a current detecting means 5 for detecting a current (the load current IL1 ), a voltage detecting means 6 for detecting a terminal voltage (DC voltage VD), switching means 7 for connecting and disconnecting the DC source (DC voltage VD), a display device 8 for displaying current and voltage values, a reporting means 9 for reporting on overcurrent IK and an abnormal voltage, and a control means 3 for controlling the overall operation of the unit, the timing for connecting and disconnecting the power source can be set according to the load L1 and the current and voltage values during the operation can be displayed as well as the occurrence of an overcurrent for an improved convenience to the user.

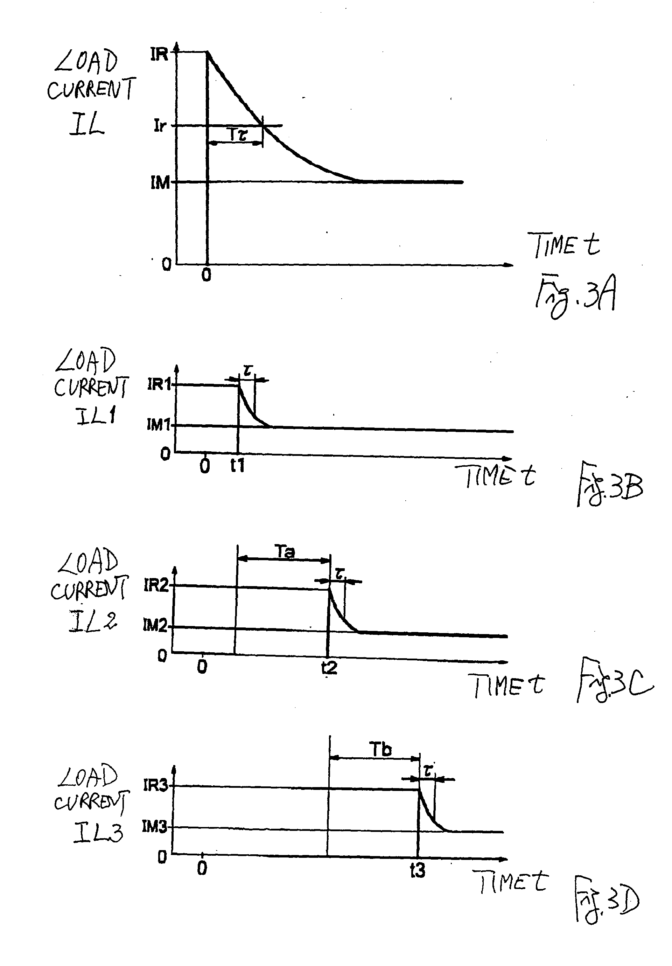

Figs. 3A, 3B, 3C and 3D, together referred to as Fig. 3, show the function of preventing rush current as one of the embodiments of the control means according to this invention. Fig. 3A shows the load current characteristic when there is no function of preventing rush current, and Figs, 3B, 3C and 3D show the time-load current characteristics of channels CH1-CH3, respectively each having the function of preventing rush current. It will be explained below on the assumption that loads L1-L3 are operated and load currents IL1-IL3 flow in channels CH1-CH3.

Fig. 3A shows a situation without the function of preventing rush current. As the DC voltage VD of the DC power source PS is applied with the loads L1-L3 connected, the wave height of the load current IL for the capacitive load reaches the maximum value of the rush current IR at the time when the DC voltage VD is applied (at τ = 0) and decreases exponentially with the time constant determined by the capacitance and resistance values to the final constant current value IM.

If the DC power source device PS is provided with the function of preventing rush current and if this function is assumed to operate even when there is a rush current exceeding the value of Ir shown in Fig. 3A and lasting for a time shorter than its transient (setting) time Tτ, this function comes into play before the elapse of this transient time Tτ after the DC voltage VD is applied to the load having the load current characteristic shown by Fig. 3A and the power supply to the terminal table unit 1 is stopped.

In Figs. 3B, 3C and 3D, the times at which the application of DC power source (DC voltage VD) is started to the loads L1-L3 are indicated as t1, t2 and t3 and the final constant current values are indicated respectively by IM1, IM2 and IM3. When the rush current limiting value IR1 of the load current IL1, the rush current limiting value IR2 of the load current IL2 and the rush current limiting value IR3 of the load current IL3 each exceed the transient time τ, the control means 3 including the sequence means 4 controls the switch elements 7a and 7b of the switching means 7 to be switched off and the supply of the DC voltage VD to the loads L1-L3 is stopped. In the situation shown by Figs. 3B, 3C and 3D, the DC voltage VD can be supplied continuously to the loads L1-L3 without stopping the load currents IL1-IL3 because none of the rush current limiting values IR1-IR3 exceeds the transient time τ.

If the load currents IL1-IL3 to the loads L1-L3 are not passed at the same time by giving a delay of Ta after the load current IL1 is caused to flow until the load current IL2 is caused to flow and another delay of Tb after the load current IL2 is caused to flow until the load current IL3 is caused to flow, the wave height of the rush current of the load currents IL1-IL3 can be kept low and the transient time of the wave height can be reduced such that it can be treated like a load with a normal current passing through without activating the overcurrent preventing function of the DC power source device PS.

As explained above, although the overcurrent IK is detected by the current detecting means 5, the control means 3 of this invention can carry out a control based on the detected overcurrent IK and the transient time τ such that no reporting on the overcurrent is made and the power source is not disconnected. Thus, the supply of power can be continued to the load although the rush current IR flows into the capacitive load and a stable power supply can be maintained without adversely affecting reliability.

In summary, since the terminal table unit 1 according to this invention serves to receive DC power supplied from a power source device PS and to distribute it among a plurality of loads L1-Ln and is adapted to control the timing for connecting and disconnecting the DC power source and the threshold current value for disconnection, and since a control unit 2 is provided for controlling the display of current and voltage values and the reporting on an overcurrent and an abnormal voltage, the user can freely set the condition of the DC source power supplied to the loads and easily observe the condition of operation of the DC power source.

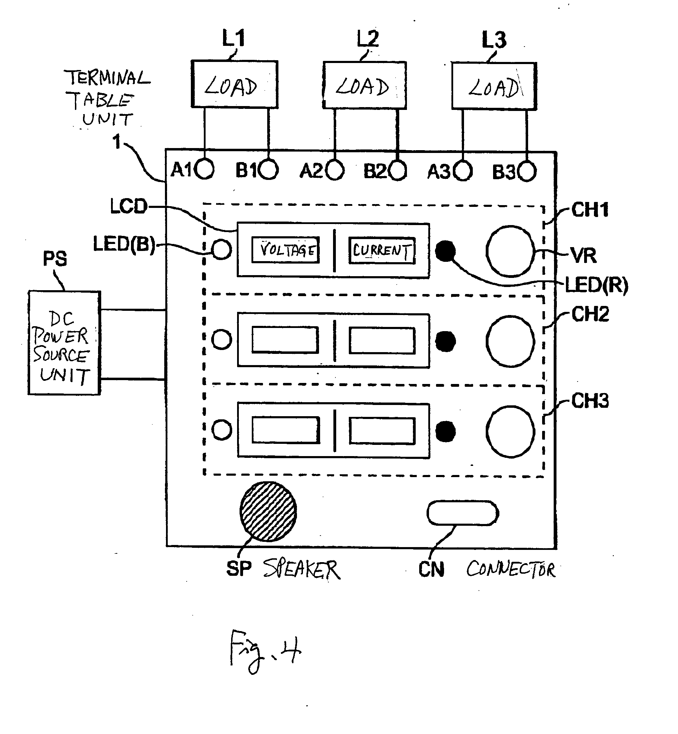

Fig. 4 shows an external image of an example of terminal table unit embodying this invention with the unit 1 structured as having three channels CH1-CH3 for supplying DC power to loads L1-L3. The channels CH1-CH3 are each provided with a liquid crystal display LCD for displaying current and voltage values, a blue light emitting diode LED(B) for indicating that the load current is normal, a red light emitting diode LED(R) for indicating that the load current is abnormal and a knob VR for setting and selecting various data. A speaker SP is provided for generating a sound in common for all three channels CH1-CH3. A connector CN to a personal computer is provided such that various data may be set through a personal computer connected through the connector CN.

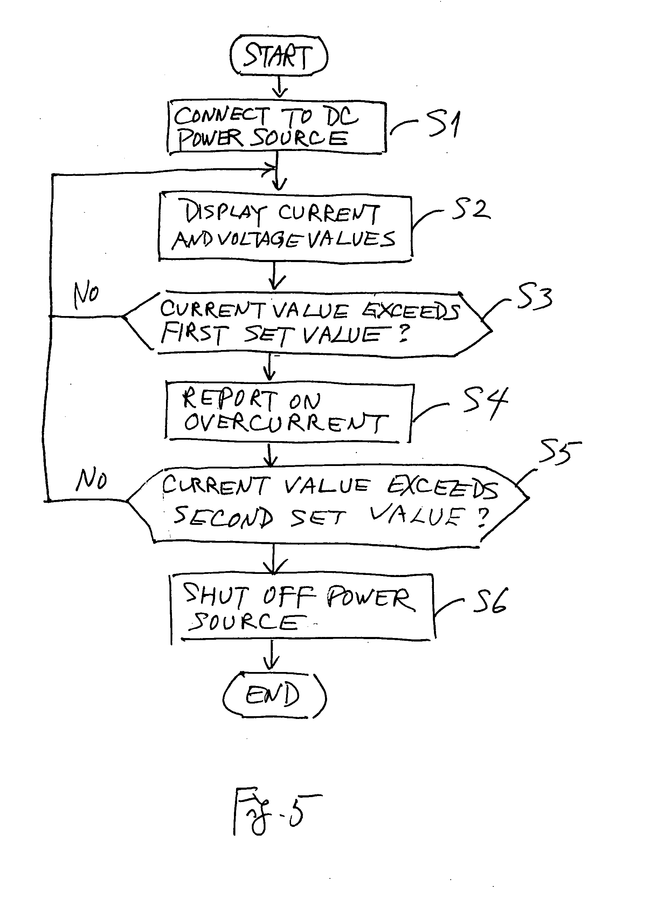

Next, a method of controlling the terminal table unit 1 is explained with reference to the flowchart of Fig. 5 as well as Fig. 2. After a DC power source is connected at a specified timing by means of the sequence means 4, the control means 3 and the switching means 7 (Step S1), current and voltage values are displayed by the current detecting means 5, the voltage detecting means 6, the control means 3 and the display means 8 (Step S2). If it is determined by the control means 3 that the current value exceeds a first set (threshold) value (YES in Step S3) which is an overcurrent value preliminarily set by the user, a report is made to the effect of an overcurrent (Step S4) by the control means 3 and the reporting means 9.

Next, if it is determined by the control means 3 that the current value exceeds a second set (threshold) value (YES in Step S5) which is another overcurrent value preliminarily set by the user, the power source is shut off (Step S6) by the control means 3 and the switching means 7. Explained more in detail, the aforementioned first set value is not as high as being dangerous such that it is sufficient to merely make a report on it but the second value is sufficiently high to be dangerous enough such that the supply of power should be stopped. If the current value does not exceed the second set value (NO in Step S5), the routine goes back to Step S2.

In summary, two threshold values are preliminarily set and a report is made if the current value is found to exceed the lower of the set values and the power supply is shut off if the current value exceeds the higher of the set values. Thus, the unit is provided with an improved reliability. It now goes without saying that the present invention is applicable to terminal table units of all kinds adapted to receive DC power from a power source unit and distribute it to a plurality of loads.

## Claims

1. A terminal table unit for receiving DC power from a DC power source and distributing the received power to a plurality of loads, said terminal table unit comprising:
a plurality of power supply terminals for connecting to said loads; and
a control unit for controlling timing of connecting and disconnecting said loads to and from said DC power source, a threshold current value related to the timing of disconnecting, display of current and voltage values and output relating to an overcurrent and an abnormal voltage value.

2. The terminal table unit of claim 1 wherein said control unit includes:
sequence means for determining said timing;
current detecting means for detecting current values;
voltage detecting means for detecting terminal voltage values at said supply terminals;
switching means for connecting and disconnecting said loads to and from said DC power source;
display means for displaying said current values and said terminal voltage values;
reporting means for making a report on said overcurrent and said abnormal voltage value; and
control means for controlling overall operations of said control unit.

3. The terminal table unit of claim 2 wherein said control unit further includes setting means for setting and changing said timing and a threshold current value related to starting of a report by said reporting means.

4. The terminal table unit of claim 2 wherein said control unit further includes memory means for storing a threshold current value related to starting a report by said reporting means, the threshold current value related to the timing of disconnecting and sequence data related to connection and disconnection of said DC power source.

5. The terminal table unit of claim 2 wherein said control means serves to control so as not to have said report outputted and so as not to disconnect said DC power source even if an overcurrent is detected by said current detecting means, based on detected value and continuing time of said overcurrent.

6. A control method of a terminal table unit which is adapted to receive DC power from a DC power source and to distribute the received power to a plurality of loads, said method comprising the steps of:
connecting said loads to said DC power source at a specified timing;
displaying current and voltage values;
judging whether a detected current value exceeds a first set value or not;
reporting on an overcurrent if said detected current value is judged to exceed said first set value;
judging whether a detected current value exceeds a second set value or not; and
disconnecting said loads from said DC power source if said detected current value is judged to exceed said second set value.
